# EUROPEAN PATENT SPECIFICATION

(11) **EP 2 459 035 B1**
(45) Date of publication and mention of the grant of the patent: **20.11.2013**
(21) Application number: 10737844.0
(22) Date of filing: 20.07.2010
(51) Int. Cl.: A47J 31/44

(54) **BEVERAGE PRODUCTION MACHINE WITH ANTIVIBRATION DRIP TRAY ASSEMBLY**
GETRÄNKEHERSTELLUNGSMASCHINE MIT ANTIVIBRATIONSABTROPFSCHALENEINHEIT
MACHINE DE PRODUCTION DE BOISSONS AVEC ENSEMBLE DE CUVETTE D'ÉGOUTTAGE ANTI-VIBRATION

(30) Priority: 30.07.2009 EP 09166805
(43) Date of publication of application: 06.06.2012
(73) Proprietor: Nestec S.A., 1800 Vevey (CH)
(72) Inventor: OZANNE, Matthieu, 74500 Champanges (FR); VUAGNIAUX, Didier, 1188 Gimel (CH)
(74) Representative: Ducreux, Marie
(86) International application number: PCT/EP2010/060453
(87) International publication number: WO 2011/012489

(56) References cited:
- DE-A1- 3 843 702
- DELONGHI: "Kaffeevollautomaten Magnifica II - ESAM 3000 B" STATE OF THE ART MADE AVAILABLE BY USE, 12 March 2007 (2007-03-12), XP007910120

## Description

The present invention relates to machine for the production of beverage implementing a water pump causing vibrations.

Beverage production machines usually implements the use of a pump for pumping water and mixing it with a food ingredient. Current used pumps are piston pumps which create small vibrations when they are implemented. The vibrations can be so important that all the machine parts are submitted to the small vibrations.

Beverage production machines also usually implement a drip tray adapted to collect the dripping liquid and waste liquid (water or beverage) that does not readily fall into the recipient in which the beverage is served. The drip tray is usually composed of a tray and of a grid laying on the upper part of the tray. The grid aims at supporting the recipient in which the beverage is served and avoiding that the bottom of this recipient lays in the dripping or waste liquid. The grid generally simply lays on the upper part of the tray without fixing means or with partial fixing means so that it can be easily removed from the tray, the tray can be emptied and the tray and the grid can be fully cleaned.

When the beverage machine produces a beverage and is submitted to the vibrations created by the pump, the grid and the drip tray shake and clink together. The machine can then become very noisy due the noise created directly by the pump and the indirect noise created by the drip tray assembly. Another disadvantage linked to these vibrations is that the cup placed on the grid can shake too which may lead to have the beverage flowing out of the cup.

The aim of the present invention is to provide a solution to the above problem and to propose a beverage production machine in which the noise issued from the drip tray assembly is reduced. Document DE-A-3843702 discloses a beverage production machine according to the preamble of independent claim 1.

The invention concerns beverage production machine according to independent claim 1.

The beverage production machine of the present invention comprises a machine base that generally supports all the different parts of the machine. This machine base currently lies on a work surface, for example a table or a kitchen work-top. The machine comprises a drip tray assembly that is usually removable for easy liquid emptying and cleaning. The drip tray assembly comprises at least a drip tray and a grid. The drip tray is a collect tank that collects liquid from the grid. The grid can simply rest on the drip tray upper part and cover the drip tray with liquid flowing through the wholes in the grid to the drip tray. In specific embodiments, the grid can be a plate hinged by one of its side to the drip tray and slightly slanted or able to be slanted so that liquid falling on it flows in direction of the drip tray. When the beverage production machine is a machine producing beverage from capsules, then the drip tray assembly can also comprise a capsule tray, for example attached to a side of the drip tray.

The drip tray assembly is retained in a nesting area of the machine, this area being generally located in the machine base. Generally the drip tray assembly is removable.

The drip tray assembly comprises support means so that said assembly rests at least partially on the work surface. The drip tray assembly doest not totally rest on the machine base but at most partly on the machine base. Then the drip tray assembly does not lie anymore totally on the base machine either directly or indirectly. Consequently this at least partial contact of the drip tray assembly with the work surface enables the immobilisation of the drip tray assembly when the machine produces vibrations. The assembly is fixed and the vibrations created by the machine are no more or at least not totally transmitted to the drip tray assembly. When the machine vibrates, its parts that are eventually in contact with the drip tray assembly slide along the drip tray assembly without making it move. The drip tray and the grid do not clink anymore.

According to the invention, the machine base presents at least one opening facing the at least one support means of the drip tray assembly so that said support means can rest on the work surface. The opening in the machine base provides a direct contact of the drip tray assembly support means with the work surface when the drip tray assembly is placed in the nesting area of the machine. This opening can present any shape. There can be one or several simple openings in the machine base facing exactly the one or several support means of the drip tray assembly or it can be a single opening facing all the support means.

According to one embodiment, at least a part of the drip tray assembly protrudes out of the machine base so that the at least one support means of the drip tray assembly rest on the work surface. The drip tray assembly does not have to protrude by a large length, the length of the support means being sufficient.

Preferably the support means raises at least a part of the drip tray assembly above the nesting area, for example by at least 0,5 mm.

According to an embodiment of the present invention, the drip tray assembly can totally rest on the work surface. Then the drip tray assembly has no contact with any other parts of the machine and no vibration at all is transmitted to the drip tray assembly. The noise created by the vibration of the drip tray assembly is completely eliminated.

According to another embodiment of the present invention, the drip tray assembly can rests partially on the work surface and partially on a part of the machine, preferably the machine base. Although the drip tray assembly is still staying partially in contact with the machine, an important part of the vibrations can be eliminated and the noise reduced. In said last embodiment, the part of the drip tray assembly that rests on a part of the machine can contact the machine by the means of shocks absorbing ribs.

The support means of the present invention can be made of any material usually used to provide contact between a beverage production machine and a work surface. Preferably they are made of a non-slip material, like gum, silicone or rubber.

The present invention is particularly useful for beverage production machine comprising a water pump creating vibrations. Yet the noise created by the cup motion and the drip tray assembly due to the vibrations of any other element of the machine can also be reduced by the implementation of the present invention.

### Brief description of the drawings

The characteristics and advantages of the invention will be better understood in relation to the figures which follow :
- Figure 1 shows a perspective view of a beverage machine equipped with a drip tray assembly according to an embodiment of the present invention,
- Figure 2 shows a perspective view of a beverage machine equipped with a drip tray assembly according to another embodiment of the present invention.
- Figure 3 shows a perspective view of a beverage machine of the type illustrated in Figure 1 except the drip tray assembly comprises a capsule tray.
- Figure 4 shows a perspective view of a beverage machine of the type illustrated in Figure 1 with a different nesting area for the drip tray assembly.

### Detailed description of the drawings

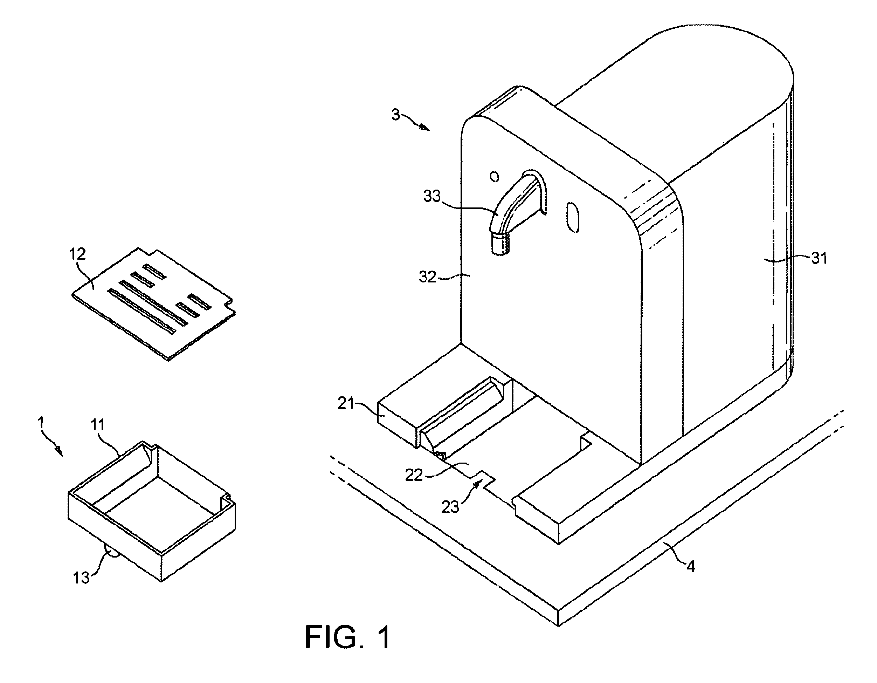

Figure 1 schematically depicts a beverage machine 3 for the preparation of the beverage. The machine comprises a cover and frame structure 31 and a front housing 32. They hire all the usual devices necessary to produce a beverage like a water tank, a pump, a water heater, a food ingredient tank or a food ingredient capsule receiver, a mixing bowl or a capsule extractor, all pipes connecting these different elements as well as an electronic controller controlling the beverage production. The front housing 32 presents a beverage outlet 33 in the form of a collector and a funnelling portion of tube. The machine also has a suitable command means and eventually an information screen to deliver short messages or information regarding the preparation of the beverage and/or servicing of the machine.

The machine comprises a base 21 that supports all the machine elements on a work surface 4. The base 21 presents a nesting area 22 for the reception of the drip tray assembly 1.

The drip tray assembly 1 comprises a drip tray 11 and an grid 12 which covers the collect tank during normal use with a beverage recipient. The grid 12 is removable with respect to the drip tray 11. The drip tray also presents support means 13 fixed to its bottom, for example a gum foot, and the machine base 21 presents in the nesting area 22 an opening 23 that faces the support means 13 when the drip tray assembly 1 is placed in the machine. Then, when the assembly is in place, the front of the drip tray assembly lays on the work surface 4. The back part of the drip tray assembly lies on the base machine, and its front side lies on the work surface. This contact of the drip tray assembly with the work surface - even if it is partial - enables the immobilisation of the drip tray assembly when the machine produces vibrations. Even if the back part of the drip tray assembly lies on the machine, the assembly is fixed and the back part that contacts the base machine only slides on the machine base when this latter vibrates.

According to another embodiment that is not illustrated, it is possible that the machine base 21 does not present any opening 23 and that the drip tray 11 presents a longer length thant the drip tray illustrated in Figure 1 so that when it is placed in the nesting area 22, the front of the drip tray 11 protrudes out of the machine base 21 and the support means 13 lies on the work surface 4.

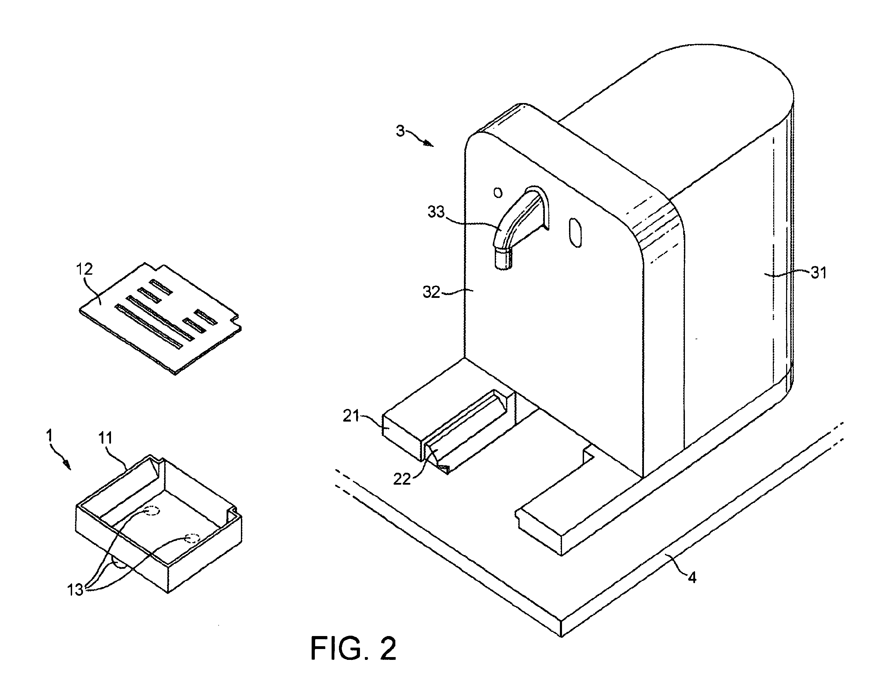

In Figure 2, the beverage machine 1 differs from the machine illustrated in Figure 1 in that the drip tray presents three support means 13 fixed to its bottom and in that the nesting area 22 of the drip tray assembly machine presents an opening 23 sufficiently large so that the three support means 13 of the drip tray can rest on the work surface 4. Then, when the drip tray assembly 1 is placed in the machine, it completely lays on the work surface 4. The support means sufficiently raise the drip tray assembly so that no part of the drip tray underside contacts the machine

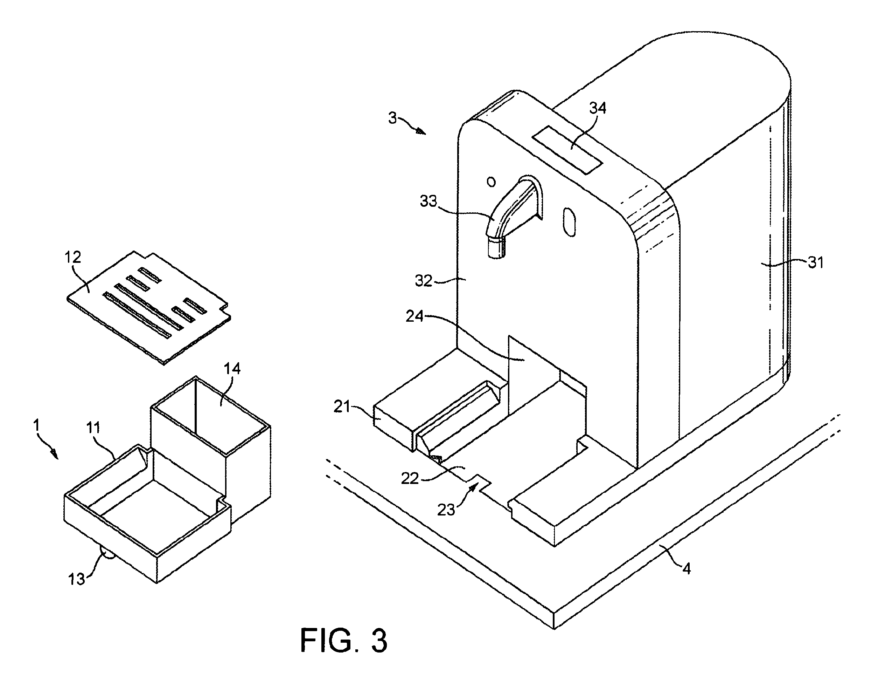

In Figure 3, the beverage machine 1 differs from the machine illustrated in Figure 1 in that it provides beverage by extraction of food ingredient capsule inserted in the machine through a capsule receptor 34 cooperating with a capsule extractor. Then the drip tray assembly comprises a capsule tray 14 and the nesting area of the machine presents a corresponding place 24 to receive said capsule tray when the drip tray assembly is inserted in the machine.

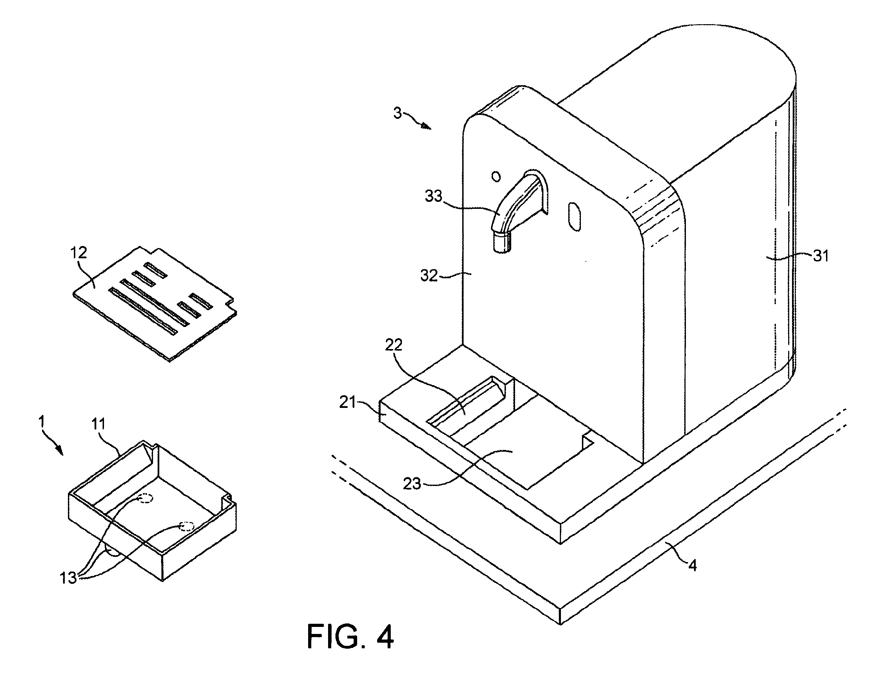

Figure 4 illustrates a beverage machine as illustrated in Figure 1 presenting a nesting area 22 for the drip tray assembly 1 in the form of rectangular recess 23 in the machine base plate 21.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements.

## Claims

1. Beverage production machine comprising :
- a machine base (21) laying on a work surface (4),
- a drip tray assembly (1) comprising a drip tray (11) and a grid (12), said assembly being retained in a nesting area (22) of the machine,
wherein the drip tray assembly comprises at least one support means (13) so that said assembly rests at least partially on the work surface, **characterised in that** the machine base (21) presents at least one opening (23) facing the support means (13) so that said means rest on the work surface (4).

2. Beverage production machine according to Claim 1 wherein at least a part of the drip tray assembly (1) protrudes out of the machine base (22) so that the support means (13) of the drip tray assembly rest on the work surface (4).

3. Beverage production machine according to any one of the precedent claims wherein the drip tray assembly (1) comprises a capsule tray (14).

4. Beverage production machine according to any one of the precedent claims, wherein the drip tray assembly (1) is removable.

5. Beverage production machine according to any one of the precedent claims, wherein the support means(13) raises at least a part of the drip tray assembly (1) above the nesting area (22).

6. Beverage production machine according to the precedent claim wherein the support means (13) raise the drip tray assembly (1) above at least a part of the nesting area by at least 0,5 mm

7. Beverage production machine according to any one of the precedent claims, wherein the drip tray assembly (1) rests totally on the work surface (4).

8. Beverage production machine according to any of Claims 1 to 6, wherein the drip tray assembly (1) rests partially on the work surface (4) and partially on a part of the machine.

9. Beverage production machine according to any one of the precedent claims wherein the support means (13) are made of a non-slip material.

10. Beverage production machine according to any one of the precedent claims wherein it comprises a water pump creating vibrations.

## Patentansprüche

1. Getränkeherstellungsmaschine mit:
- einem Maschinenunterteil (21), das auf einer Arbeitsfläche (4) aufliegt,
- einer Tropfschalenanordnung (1) mit einer Tropfschale (11) und einem Gitter (12), wobei die Anordnung in einem Verschachtelungsbereich (22) der Maschine gesichert wird,
wobei die Tropfschalenanordnung mindestens eine Stützeinrichtung (13) derart umfasst, dass die Anordnung zumindest teilweise auf der Arbeitsfläche aufliegt, **dadurch gekennzeichnet, dass** das Maschinenunterteil (21) mindestens eine Öffnung (23) aufweist, die der Stützeinrichtung (13) gegenüberliegt, so dass die Einrichtung auf der Arbeitsfläche (4) aufliegt.

2. Getränkeherstellungsmaschine gemäß Anspruch 1, wobei mindestens ein Teil der Tropfschalenanordnung (1) aus dem Maschinenunterteil (22) derart vorsteht, dass die Stützeinrichtung (13) der Tropfschalenanordnung auf der Arbeitsfläche (4) aufliegt.

3. Getränkeherstellungsmaschine gemäß einem der vorhergehenden Ansprüche, wobei die Tropfschalenanordnung (1) eine Kapselschale (14) umfasst.

4. Getränkeherstellungsmaschine gemäß einem der vorhergehenden Ansprüche, wobei die Tropfschalenanordnung (1) abnehmbar ist.

5. Getränkeherstellungsmaschine gemäß einem der vorhergehenden Ansprüche, wobei die Stützeinrichtung (13) zumindest einen Teil der Tropfschalenanordnung (1) über den Verschachtelungsbereich (22) anhebt.

6. Getränkeherstellungsmaschine gemäß einem der vorhergehenden Ansprüche, wobei die Stützeinrichtung (13) die Tropfschalenanordnung (1) über zumindest einen Teil des Verschachtelungsbereiches um mindestens 0,5 mm anhebt.

7. Getränkeherstellungsmaschine gemäß einem der vorhergehenden Ansprüche, wobei die Tropfschalenanordnung (1) vollständig auf der Arbeitsfläche (4) aufliegt.

8. Getränkeherstellungsmaschine gemäß einem der Ansprüche 1 bis 6, wobei die Tropfschalenanordnung (1) teilweise auf der Arbeitsfläche (4) und teilweise auf einem Teil der Maschine aufliegt.

9. Getränkeherstellungsmaschine gemäß einem der vorhergehenden Ansprüche, wobei die Stützeinrichtungen (13) aus einem rutschfesten Material bestehen.

10. Getränkeherstellungsmaschine gemäß einem der vorhergehenden Ansprüche, wobei sie eine Schwingungen erzeugende Wasserpumpe aufweist.

## Revendications

1. Appareil de production de boisson comprenant :
- une base de machine (21) disposée sur une surface de travail (4),
- un ensemble bac d'égouttement (1) comprenant un bac d'égouttement (11) et une grille (12), ledit ensemble étant retenu dans une zone d'emboîtement (22) de la machine,
dans lequel l'ensemble bac d'égouttement comprend au moins un moyen de support (13) de sorte que ledit ensemble repose au moins partiellement sur la surface de travail, **caractérisé en ce que** la base de machine (21) présente au moins une ouverture (23) faisant face aux moyens de support (13) de sorte que lesdits moyens reposent sur la surface de travail (4).

2. Appareil de production de boisson selon la revendication 1, dans lequel au moins une partie de l'ensemble bac d'égouttement (1) fait saillie hors de la base de machine (22) de sorte que les moyens de support (13) de l'ensemble bac d'égouttement reposent sur la surface de travail (4).

3. Appareil de production de boisson selon l'une quelconque des revendications précédentes, dans lequel l'ensemble bac d'égouttement (1) comprend un bac à capsules (14).

4. Appareil de production de boisson selon l'une quelconque des revendications précédentes, dans lequel l'ensemble bac d'égouttement (1) est amovible.

5. Appareil de production de boisson selon l'une quelconque des revendications précédentes, dans lequel le moyen de support (13) soulève au moins une partie de l'ensemble bac d'égouttement (1) au-dessus de la zone d'emboîtement (22).

6. Appareil de production de boisson selon la revendication précédente, dans lequel les moyens de support (13) soulèvent l'ensemble bac d'égouttement (1) au-dessus d'au moins une partie de la zone d'emboîtement d'au moins 0,5 mm.

7. Appareil de production de boisson selon l'une quelconque des revendications précédentes, dans lequel l'ensemble bac d'égouttement (1) repose entièrement sur la surface de travail (4).

8. Appareil de production de boisson selon l'une quelconque des revendications 1 à 6, dans lequel l'ensemble bac d'égouttement (1) repose partiellement sur la surface de travail (4) et partiellement sur une partie de la machine.

9. Appareil de production de boisson selon l'une quelconque des revendications précédentes, dans lequel les moyens de support (13) sont réalisés en un matériau antidérapant.

10. Appareil de production de boisson selon l'une quelconque des revendications précédentes, celui-ci comprenant une pompe à eau créant des vibrations.
